(19) Europäisches Patentamt
European Patent Office
Office européen des brevets

(11) **EP 4 333 164 A1**

(12) **EUROPEAN PATENT APPLICATION**
published in accordance with Art. 153(4) EPC

(43) Date of publication:
**06.03.2024 Bulletin 2024/10**

(21) Application number: **22874668.1**

(22) Date of filing: **16.09.2022**

(51) International Patent Classification (IPC):
**H01M 50/103** (2021.01)

(52) Cooperative Patent Classification (CPC):
**H01M 50/103; Y02E 60/10**

(86) International application number:
**PCT/CN2022/119291**

(87) International publication number:
**WO 2023/051281 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2021 CN 202122409606 U**

(71) Applicant: **BYD Company Limited**
**Shenzhen, Guangdong 518118 (CN)**

(72) Inventors:
• **LIANG, Liwei**
**Shenzhen, Guangdong 518118 (CN)**
• **HU, Shumin**
**Shenzhen, Guangdong 518118 (CN)**
• **CHEN, Yuanyuan**
**Shenzhen, Guangdong 518118 (CN)**
• **ZHANG, Jian**
**Shenzhen, Guangdong 518118 (CN)**
• **OUYANG, Jinzhong**
**Shenzhen, Guangdong 518118 (CN)**

(74) Representative: **Arnold & Siedsma**
**Bezuidenhoutseweg 57**
**2594 AC The Hague (NL)**

(54) **BATTERY HOUSING**

(57) A battery casing includes a first side plate, a second side plate, a third side plate, a fourth side plate, a connecting plate and a support plate. The first side plate, the second side plate, the third side plate and the fourth side plate are connected in sequence. The first side plate and the third side plate are arranged opposite to each other, and the length of the first side plate is less than the length of the third side plate. The second side plate and the fourth side plate are arranged opposite to each other, and the length of the fourth side plate is less than the length of the second side plate. A connecting plate adapted to mount a tab of a battery is provided between the first side plate and the fourth side plate and connected to the first side plate and the fourth side plate, and the length of the connecting plate is less than the length of the second side plate and the third side plate. The first side plate, the second side plate, the third side plate, the fourth side plate and the connecting plate are located at the same side of the support plate, and work with the support plate to define an accommodating cavity.

FIG. 1

**Description**

## CROSS REFERENCE TO RELATED APPLICATIONS

The present disclosure claims priority to Chinese Patent Application No. 202122409606.9 filed on September 30, 2021 and entitled "Battery casing", which is incorporated herein by reference in its entirety.

## FIELD

The present disclosure relates to the technical field of battery packages, and more specifically, to a battery casing.

## BACKGROUND

In related art, the side wall of a battery casing is mainly a rectangular frame structure enclosed by plates, and the tab of the electrode core can be welded with one of the plates. Therefore, a space for accommodating the tab needs to be reserved in the battery casing, causing the reduction of the overall accommodating space in the battery casing, and low energy storage capacity of the battery.

## SUMMARY

The present disclosure aims to alleviate or solve at least one of the problems mentioned above to at least some extent.

The present disclosure provides a battery casing, which includes a first side plate, a second side plate, a third side plate and a fourth side plate, where the first side plate, the second side plate, the third side plate and the fourth side plate are connected in sequence; the first side plate and the third side plate are arranged opposite to each other, and the length of the first side plate is less than the length of the third side plate; and the second side plate and the fourth side plate are arranged opposite to each other, and the length of the fourth side plate is less than the length of the second side plate; a connecting plate adapted to mount the tab of the battery, where the connecting plate is provided between the first side plate and the fourth side plate and connected to the first side plate and the fourth side plate, and the length of the connecting plate is less than the length of the second side plate and the third side plate; and a support plate, where the first side plate, the second side plate, the third side plate, the fourth side plate and the connecting plate are located at the same side of the support plate, and work with the support plate to define an accommodating cavity.

Optionally, the first side plate is parallel to the third side plate, the second side plate is parallel to the fourth side plate, the first side plate is perpendicular to the second side plate, the third side plate is perpendicular to the fourth side plate, and the length of the connecting plate is less than the length of the first side plate and the fourth side plate.

Optionally, the first side plate, the second side plate, the third side plate, the fourth side plate and the connecting plate have the same thickness.

Optionally, the first side plate, the second side plate, the third side plate, the fourth side plate and the connecting plate have a thickness in the range of 0.03 mm to 0.15 mm.

Optionally, the first side plate, the second side plate, the third side plate, the fourth side plate and the connecting plate are formed integrally.

Optionally, the angle between the connecting plate and the fourth side plate is $\alpha$, and $120° \leq \alpha \leq 160°$.

Optionally, an injection hole communicating with the accommodating cavity is provided on the first side plate or the fourth side plate, and the injection hole is a countersunk hole recessed inward from an outer surface of the first side plate or the fourth side plate.

Optionally, an edge at one side of the first side plate, the second side plate, the third side plate, the fourth side plate and the connecting plate is connected to the support plate, and an edge at the other side is respectively provided with a flange bent outward.

Optionally, the battery casing further includes an upper casing. The upper casing has a shape corresponding to the shape of the accommodating cavity, and the upper casing is connected to the first side plate, the second side plate, the third side plate, the fourth side plate and the connecting plate to close the accommodating cavity.

Optionally, the upper casing, the first side plate, the second side plate, the third side plate, the fourth side plate and the connecting plate are respectively a metal member, and the upper casing is welded to the first side plate, the second side plate, the third side plate, the fourth side plate and the connecting plate.

Therefore, in accordance with the battery casing provided in the present disclosure, the connecting plate, the first side plate, the second side plate, the third side plate and the fourth side plate are connected to form five side walls enclosing the battery casing, the connecting plate is provided between the first side plate and the fourth side plate, and the length of the connecting plate for mounting the tab of the battery is set to be less than the length of the second side plate and the fourth side plate, to reduce the space occupied for mounting the tab. Accordingly, this increases the volume of the accommodating cavity, and finally ensures the full utilization of the internal space in the battery casing.

## BRIEF DESCRIPTION OF THE DRAWINGS

The above and/or other additional aspects and advantages of the present disclosure will become apparent and comprehensible from the description of embodiments in connection with accompanying drawings, in which:

FIG. 1 shows a schematic structural view of a battery casing according to an embodiment of the present disclosure;

FIG. 2 shows a cross-sectional view of a battery casing according to an embodiment of the present disclosure;

FIG. 3 shows a cross-sectional view of a battery casing in related art;

FIG. 4 shows an exploded view of a battery according to an embodiment of the present disclosure; and

FIG. 5 shows a schematic partial structural view of a battery casing according to an embodiment of the present disclosure.

List of reference numerals:

100 battery casing;

10 first side plate; 20 second side plate; 30 third side plate; 40 fourth side plate;

50 connecting plate; 60 support plate; 70 accommodating cavity;

80 injection hole; 81 sealing nail; 90 upper casing;

200 electrode core; 201 tab; 300 spacer ring;

1 first plate gap; 2 second plate gap; 3 third plate gap; 4 forth plate gap;

5 bottom plate; 6 chamber.

## DETAILED DESCRIPTION

Various exemplary embodiments of the present invention are now be described in detail with reference to the accompanying drawings. It is to be noted that unless otherwise specified, the relative arrangement, numerical expressions, and numerical values of components and steps described in the embodiments do not limit the scope of the disclosure.

The following descriptions of at least one exemplary embodiment are merely illustrative, and do not constitute any limitation on the present disclosure and application or use thereof in any way.

Technologies, methods, and devices known to those of ordinary skill in related art may not be discussed in detail, but where appropriate, the technologies, the methods, and the devices should be considered as a part of the specification.

In all examples shown and discussed herein, any specific value should be construed to be merely exemplary, and not as limitations. Therefore, other examples of exemplary embodiments may have different values.

It should be noted that similar reference numerals and letters indicate similar items in the following drawings. Therefore, once an item is defined in a drawing, it has no need to be discussed further in the following drawings.

A battery casing 100 according to an embodiment of the present disclosure will be described in detail below in conjunction with the drawings.

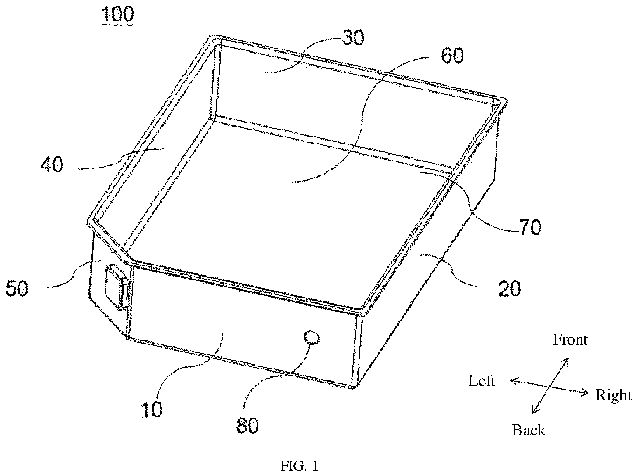

As shown in FIGs. 1 to 5, the battery casing 100 according to the embodiment of the present disclosure includes a first side plate 10, a second side plate 20, a third side plate 30, a fourth side plate 40, a connecting plate 50 adapted to mount a tab 201 of a battery, and a support plate 60.

Specifically, the first side plate 10, the second side plate 20, the third side plate 30 and the fourth side plate 40 are connected in sequence. The first side plate 10 and the third side plate 30 are arranged opposite to each other, and the length of the first side plate 10 is less than the length of the third side plate 30. The second side plate 20 and the fourth side plate 40 are arranged opposite to each other, and the length of the fourth side plate 40 is less than the length of the second side plate 20. The connecting plate 50 is provided between the first side plate 10 and the fourth side plate 40, and connected to the first side plate 10 and the fourth side plate 40, and the length of the connecting plate 50 is less than the length of the first side plate 10 and the fourth side plate 40. The first side plate 10, the second side plate 20, the third side plate 30, the fourth side plate 40 and the connecting plate 50 are located at the same side of the support plate 60, and work with the support plate 60 to define an accommodating cavity 70.

In other words, the battery casing 100 according to the embodiment of the present disclosure is mainly formed of the first side plate 10, the second side plate 20, the third side plate 30, the fourth side plate 40, the connecting plate 50 and the support plate 60 connected in sequence. The connecting plate 50 is provided between the first side plate 10 and the fourth side plate 40, and connected to the first side plate 10 and the fourth side plate 40. The support plate 60 works with the first side plate 10, the second side plate 20, the third side plate 30, the fourth side plate 40 and the connecting plate 50 to define the accommodating cavity 70. The tab 201 of a battery can be welded to the connecting plate 50.

Particularly, a first end of the first side plate 10 can be connected to a first end of the second side plate 20, a second end of the second side plate 20 can be connected to a first end of the third side plate 30, a second end of the third side plate 30 can be connected to a first end of the fourth side plate 40, and a second end of the fourth side plate 40 can be connected to a second end of the first side plate 10 through the connecting plate 50. The first side plate 10 and the third side plate 30 are arranged opposite to each other, and the second side plate 20 and the fourth side plate 40 are arranged opposite to each other. That is to say, the first side plate 10, the second side plate 20, the third side plate 30, the fourth side plate 40 and the connecting plate 50 can be sequentially connected end to end, to form side walls enclosing the battery casing 100.

For example, when the first side plate 10 and the third side plate 30 extend in a left-right direction and the second side plate 20 and the fourth side plate 40 extend in a front-rear direction, a front and a rear end of the second side plate 20 can be respectively connected to a right end of the first side plate 10 and a right end of the third side plate 30, a left end of the third side plate 30 can be connected to a front end of the fourth side plate 40, and two ends of the connecting plate 50 can be respectively connected to a left end of the first side plate 10 and a rear end of the fourth side plate 40.

In addition, the length of the first side plate 10 is less than the length of the third side plate 30, the length of the fourth side plate 40 is less than the length of the second side plate 20, and the length of the connecting plate 50 is less than the length of the second side plate 20 and the third side plate 30. That is to say, the length of the connecting plate 50 is less than two longer plates among the first side plate 10, the second side plate 20, the third side plate 30 and the fourth side plate 40. In addition, the connecting plate 50, the first side plate 10, the second side plate 20, third side plate 30 and fourth side plate 40 can have the same height, to facilitate the assembly of the ends of the plates, and improve the leak tightness and stability of the battery casing 100.

Further, the first side plate 10, the second side plate 20, the third side plate 30, the fourth side plate 40 and the connecting plate 50 are located at the same side of the support plate 60, and work with the support plate 60 to define the accommodating cavity 70. The shape of the support plate 60 can be the same as the shape enclosed by the first side plate 10, the second side plate 20, the third side plate 30, the fourth side plate 40 and the connecting plate 50, thereby providing good support and leak tightness.

When the battery casing 100 is used, an electrode core 200 is placed in the accommodating cavity 70, and an electrolyte solution is injected into the accommodating cavity 70. Particularly, the connecting plate 50, the first side plate 10, the second side plate 20, the third side plate 30 and the fourth side plate 40 can be five side walls of the battery casing 100, and the support plate 60 mainly provides a support and sealing performances. The electrode core 200 can be placed in the accommodating cavity 70, and the position of the tab 201 of the electrode core corresponds to the position of the connecting plate 50.

Considering the assembly of the electrode core 200 and the battery casing 100, a space for assembling the tab 201 is formed between a side of the electrode core 200 provided with the tab 201 and the battery casing 100. Since the space between the connecting plate 50 and the electrode core 200 is larger than at least some of the spaces between other plates of the battery casing 100 (except for the support plate 60) and an outer wall surface of the electrode core 200, the length of the connecting plate 50 needs to be reduced, thereby further reducing the space required for assembling the tab 201. It should be noted that, in the present disclosure, the comparison of the sizes of different spaces refers to the comparison of the shortest straight-line distance between two surfaces forming a space with the shortest straight-line distance between two faces forming another space.

Therefore, in accordance with the battery casing 100 according to the embodiment of the present disclosure, the connecting plate 50, the first side plate 10, the second side plate 20, the third side plate 30 and the fourth side plate 40 are connected to form five side walls of the battery casing 100, the connecting plate 50 is provided between the first side plate 10 and the fourth side plate 40, and the length of the connecting plate 50 for mounting the tab of the battery is set to be less than the length of the second side plate 20 and the third side plate 30, to reduce the space occupied for mounting the tab. Accordingly, this increases the volume of the accommodating cavity 70, and finally ensures the full utilization of the internal space in the battery casing 100.

According to an embodiment of the present disclosure, as shown in FIG. 1, the first side plate 10 is parallel to the third side plate 30, the second side plate 20 is parallel to the fourth side plate 40, the first side plate 10 is perpendicular to the second side plate 20, the third side plate 30 is perpendicular to the fourth side plate 40, and the length of the connecting plate 50 is less than the length of the first side plate and the fourth side plate.

That is to say, when the first side plate 10 extends in the same direction as the third side plate 30 does, the second side plate 20 extends in the same direction as the fourth side plate 40 does, the first side plate 10 and the second side plate 20 are arranged perpendicular to each other, and the third side plate 30 and the fourth side plate 40 are also arranged perpendicular to each other, the angle between the first side plate 10 and the second side plate 20 is a right angle, the angle between the third side plate 30 and the fourth side plate 40 is a right angle, and also the angle between the second side plate 20 and the third side plate 30 is a right angle. The angle between the first side plate 10 and the connecting plate 50 is an obtuse angle, and the angle between the fourth side plate 40 and the connecting plate 50 is also an obtuse angle.

In addition, since the length of the first side plate 10 is less than the length of the third side plate 30, the length of the fourth side plate 40 is less than the length of the second side plate 20, and the length of the connecting plate 50 is less than the length of the first side plate 10 and the fourth side plate 40, the connecting plate 50 has the minimum length among the five plates. This can further reduce the space for mounting the tab 201, and increase the space for accommodating the electrode core 200 in the accommodating cavity 80.

Through such an arrangement in which the first side plate 10 is parallel to the third side plate 30, the second side plate 20 is parallel to the fourth side plate 40, the first side plate 10 is perpendicular and connected to the second side plate 20, and the third side plate 30 is perpendicular and connected to the fourth side plate 40, the appearance of the battery casing 100 becomes more compact, neat, regular and aesthetic, and the connection between the connecting plate 50, the first side plate 10, the second side plate 20, the third side plate 30 and the fourth side plate 40 is facilitated, making the assembly more convenient.

In some specific embodiments of the present disclosure, as shown in FIG. 1, the first side plate 10, the second side plate 20, the third side plate 30, the fourth side plate 40 and the connecting plate 50 have the same thickness. That is to say, the battery casing 100 is uniform in wall thickness, and different side plates have the same thickness. By setting the same thickness of the first side plate 10, the second side plate 20, the third side plate 30, the fourth side plate 40 and the connecting plate 50, the whole structure of the battery casing 100 can be uniformly stressed. The first side plate 10, the second side plate 20, the third side plate 30, the fourth side plate 40 and the connecting plate 50 can have the same reliability when resisting an external force.

According to an embodiment of the present disclosure, the first side plate 10, the second side plate 20, the third side plate 30, the fourth side plate 40 and the connecting plate 50 have a thickness in the range of 0.03 mm to 0.15 mm. That is to say, the thickness of the first side plate 10, the second side plate 20, the third side plate 30, the fourth side plate 40 and the connecting plate 50 can be 0.03 mm, 0.05 mm, 0.08 mm, 0.1 mm, 0.12 mm or 0.15 mm, which is not particularly limited herein. When the thickness of the first side plate 10, the second side plate 20, the third side plate 30, the fourth side plate 40 and the connecting plate 50 is in this range, not only the strength of the plate against external force is improved, but also the weight is reduced, and the waste of the preparation material caused by a too thick plate is avoided.

In some specific embodiments of the present disclosure, the first side plate 10, the second side plate 20, the third side plate 30, the fourth side plate 40 and the connecting plate 50 are formed integrally. By arranging the side walls of the battery casing 100 as an integrally formed structure, the subsequent assembly with the support plate 60 is facilitated, the material for moldmaking is saved, and the production cost is reduced, so as to realize mass production.

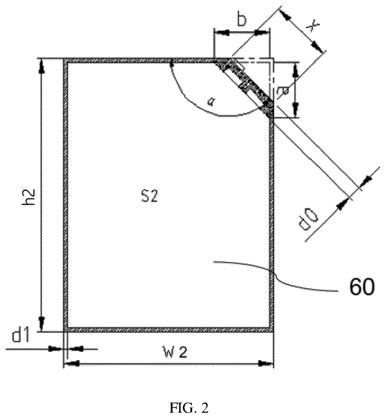

According to an embodiment of the present disclosure, as shown in FIG. 2, the angle between the connecting plate 50 and the fourth side plate 40 is α, and $120° \leq α \leq 160°$. That is to say, when $120° \leq α \leq 160°$, the internal space in the battery casing 100 can be more fully utilized. α can be 120°, 135°, 145°, 155° or 160°, and the specific value of α can be determined according to the actual situation.

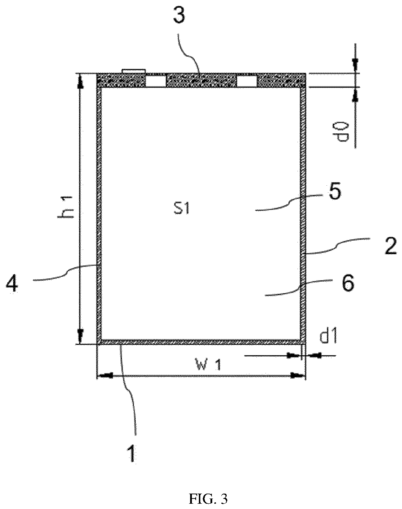

The space utilization of the battery casing 100 will be further described below with reference to specific embodiment. FIG. 3 shows a cross-sectional view of an assembly gap between the electrode core and the battery casing in related art. As shown in FIG. 3, S1 is the cross-sectional area of the space occupied by the electrode core.

In related art, the battery casing includes a first plate, a second plate, a third plate, a forth plate, and a bottom plate 5. The four plates and the bottom plate 5 enclose a chamber 6. In addition, the shaded areas in the figure are the gaps between the plates and the electrode core. The first plate gap 1, the second plate gap 2, the third plate gap 3 and the forth plate gap 4 are respectively gaps between the first plate, the second plate, the third plate, and the forth plate and the electrode core. The tab of the battery core is located between the third plate and the electrode core. Because of the need to reserve a space for mounting the tab, the width d0 of the gap between the third plate and the electrode core is greater than the width d1 of the gap between other plates and the electrode core. Therefore, the gap between the third plate and the electrode core occupies more volume, so that the remaining volume for accommodating the electrode core in the chamber 6 is small.

FIG. 2 shows a cross-sectional view of a battery casing 100 according to the present disclosure. In the figure, the cross-sectional area of the space occupied by the electrode core is S2, and the shaded areas are the gaps between the first side plate 10, the second side plate 20, the third side plate 30, the fourth side plate 40 and the connecting plate 50 and the electrode core 200.

$$S1 = (w1-2*d1)*(h1-d0-d1)$$

$$S2 = (w2-2*d1)*(h2-2*d1)-0.5ab$$

$$a= d0/\cos(\pi-α)+x\sin(\pi-α)-2d1$$

$$b= d0/\sin(\pi-α)+x\cos(\pi-α)-2d1/\tan(\pi-α)$$

where w1 is the width of the existing battery casing; h1 is the length of the existing battery casing; w2 is the length of the first side plate 10; h2 is the length of the second side plate 20; d0 is the width of the tab mounting space; d1 is the width of the gap between the electrode core and the side wall of the battery casing 100 (except for the connecting plate 50); and X is the length of the connecting plate 50.

When w1=w2 and h1=h2, and when S1<S2, the space in the accommodating cavity 70 of the battery casing 100 of the present disclosure is larger than that of the accommodating space of the existing battery casing. In this case, a reasonable range of α can be calculated.

In some specific embodiments of the present disclosure, as shown in FIGs. 1, 4, and 5, an injection hole 80 communicating with the accommodating cavity 70 is provided on the first side plate 10 or the fourth side plate 40, and the injection hole 80 is a countersunk hole recessed inward from an outer surface of the first side plate 10 or the fourth side plate 40. That is to say, the injection hole 80 can be provided on the first side plate 10, and the injection hole 80 can also be provided on the fourth side plate 40. The injection hole 80 communicating with the mounting cavity, and the electrolyte solution can be input into the mounting cavity via the injection hole 80. The size and shape of the injection hole 80 are not particularly limited herein. The specific position of the injection hole 80 can be selected according to the actual requirement in production. In addition, by setting the injection hole 80 as a countersunk hole, the electrolyte solution can be conveniently injected from the outside of the battery casing 100 into the mounting cavity, and the injection hole 80 can mate with a sealing nail 81 more tightly, thereby avoiding the leakage of the electrolyte solution from the injection hole 80. Moreover, the arrangement of the countersunk hole ensures the integrity of the whole structure, avoiding that the position of the injection hole 80 is higher than the plane of the plate, and ensuring the flatness of the appearance of the battery casing 100.

According to an embodiment of the present disclosure, as shown in FIG. 1, an edge at one side of the first side plate 10, the second side plate 20, the third side plate 30, the fourth side plate 40 and the connecting plate 50 is connected to the support plate 60, and an edge at the other side is respectively provided with a flared edge bent outward. Notably, the flange is bent toward the outside of the accommodating cavity 70. By providing the flange bent outward at the edged at the same of the first side plate 10, the second side plate 20, the third side plate 30, the fourth side plate 40 and the connecting plate 50, the subsequent hermetical assembly with other plates is facilitated, thereby effectively preventing external water vapor from entering the interior of the battery casing 100 from the edge. Moreover, the width of the flange may be larger than the thickness of the first side plate 10, the second side plate 20, the third side plate 30, the fourth side plate 40 and the connecting plate 50. The specific width of the flange is not particularly limited herein.

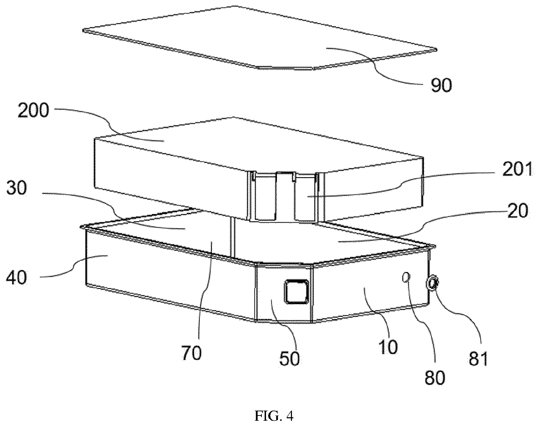

In some specific embodiments of the present disclosure, as shown in FIG. 4, the battery casing 100 further includes an upper casing 90. The upper casing 90 has a shape corresponding to the shape of the accommodating cavity 70, and the upper casing 90 is connected to the first side plate 10, the second side plate 20, the third side plate 30, the fourth side plate 40 and the connecting plate 50 to close the accommodating cavity 70. That is to say, the upper casing 90 can also have a pentagonal structure, and the short side correspond to the position of the connecting plate 50. The upper casing 90 can be arranged in parallel and opposite to the support plate 60. By setting the shape of the upper casing 90 to correspond to the shape of the mounting cavity, the upper casing 90 can be ensured to well seal the mounting cavity. Optionally, the thickness of the upper casing 90 is 0.030 mm-0.15 mm, including the endpoint values. Moreover, the thickness of the upper casing 90 can be larger than the thickness of the support plate 60.

According to an embodiment of the present disclosure, the upper casing 90, the first side plate 10, the second side plate 20, the third side plate 30, the fourth side plate 40 and the connecting plate 50 are respectively a metal member. The upper casing 90 is welded to the first side plate 10, the second side plate 20, the third side plate 30, the fourth side plate 40 and the connecting plate 50. For example, the upper casing 90, the first side plate 10, the second side plate 20, the third side plate 30, the fourth side plate 40 and the connecting plate 50 can be made of stainless steel or other alloy materials, to improve the ductility and hardness of the battery casing 100. In addition, the upper casing 90 can be connected to the first side plate 10, the second side plate 20, the third side plate 30, the fourth side plate 40 and the connecting plate 50 by welding, to enhance the connection strength of the upper casing 90 with the first side plate 10, the second side plate 20, the third side plate 30, the fourth side plate 40 and the connecting plate 50, and improve the package strength of the battery casing 100.

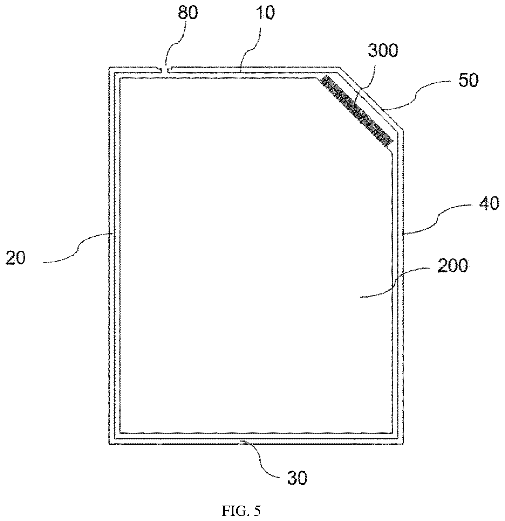

Optionally, as shown in FIG. 5, a spacer ring 300 can be provided between the electrode core 200 and the connecting plate 50. By providing the spacer ring 300 at a position away from the injection hole 50, the subsequent injection of the electrolyte solution is facilitated.

In summary, in accordance with the battery casing 100 according to the embodiment of the present disclosure, the first side plate 10, the second side plate 20, the third side plate 30, the fourth side plate 40, the connecting plate 50 adapted to mount a tab of a battery are connected to the support plate 60, and the tab mounting space is reduced to well improve the space utilization. In this way, the space utilization of the battery casing 100 is improved.

Other configurations and operations of the battery casing according to the embodiments of the present disclosure are known to those of ordinary skill in the art and will not be described in detail herein.

Although some specific embodiments of the present disclosure have been described in detail by way of examples, a person skilled in the art should understand that the foregoing examples are merely for description, and not intended to limit the scope of the present disclosure. A person skilled in the art should appreciate that modifications can be made to the foregoing embodiments without departing from the scope and spirit of the present disclosure. The scope of the present disclosure is defined by the appended claims.

**Claims**

1.   A battery casing (100), comprising:

a first side plate (10), a second side plate (20), a third side plate (30) and a fourth side plate (40), the first side plate (10), the second side plate (20), the third side plate (30) and the fourth side plate (40) being connected in sequence, wherein the first side plate (10) and the third side plate (30) are arranged opposite to each other, and the length of the first side plate (10) is less than the length of the third side plate (30); and the second side plate (20) and the fourth side plate (40) are arranged opposite to each other, and the length of the fourth side plate (40) is less than the length of the second side plate (20); a connecting plate (50) adapted to mount a tab (201) of a battery, the connecting plate (50) being provided between the first side plate (10) and the fourth side plate (40) and connected to the first side plate (10) and the fourth side plate (40), and the length of the connecting plate (50) is less than the length of the second side plate (20) and the third side plate (30); and a support plate (60), the first side plate (10), the second side plate (20), the third side plate (30), the fourth side plate (40) and the connecting plate (50) being located at the same side of the support plate (60), and working with the support plate (60) to define an accommodating cavity (70).

2. The battery casing (100) according to claim 1, wherein the first side plate (10) is parallel to the third side plate (30), the second side plate (20) is parallel to the fourth side plate (40), the first side plate (10) is perpendicular to the second side plate (20), the third side plate (30) is perpendicular to the fourth side plate (40), and the length of the connecting plate (50) is less than the length of the first side plate (10) and the fourth side plate (40).

3. The battery casing (100) according to claim 1 or 2, wherein the first side plate (10), the second side plate (20), the third side plate (30), the fourth side plate (40) and the connecting plate (50) have the same thickness.

4. The battery casing (100) according to any one of claims 1 to 3, wherein the first side plate (10), the second side plate (20), the third side plate (30), the fourth side plate (40) and the connecting plate (50) have a thickness in the range of 0.03 mm to 0.15 mm.

5. The battery casing (100) according to any one of claims 1 to 4, wherein the first side plate (10), the second side plate (20), the third side plate (30), the fourth side plate (40) and the connecting plate (50) are formed integrally.

6. The battery casing (100) according to any one of claims 1 to 5, wherein the angle between the connecting plate (50) and the fourth side plate (40) is $\alpha$, and $120° \leq \alpha \leq 160°$.

7. The battery casing (100) according to any one of claims 1 to 6, wherein an injection hole (80) communicating with the accommodating cavity (70) is provided on the first side plate (10) or the fourth side plate (40), and the injection hole (80) is a countersunk hole recessed inward from an outer surface of the first side plate (10) or the fourth side plate (40).

8. The battery casing (100) according to any one of claims 1 to 7, wherein an edge at a side of the first side plate (10), the second side plate (20), the third side plate (30), the fourth side plate (40) and the connecting plate (50) is connected to the support plate (60), and an edge at the other side is respectively provided with a flange bent outward.

9. The battery casing (100) according to any one of claims 1 to 8, further comprising: an upper casing (90), the upper casing (90) has a shape corresponding to the shape of the accommodating cavity (70), the upper casing (90) is connected to the first side plate (10), the second side plate (20), the third side plate (30), the fourth side plate (40) and the connecting plate (50) to close the accommodating cavity (70).

10. The battery casing (100) according to claim 9, wherein the upper casing (90), the first side plate (10), the second side plate (20), the third side plate (30), the fourth side plate (40) and the connecting plate (50) are respectively a metal member, and the upper casing (90) is welded to the first side plate (10), the second side plate (20), the third side plate (30), the fourth side plate (40) and the connecting plate (50).

FIG. 1

FIG. 2

FIG. 3

FIG. 4

FIG. 5

**INTERNATIONAL SEARCH REPORT**

| International application No. |
|---|
| **PCT/CN2022/119291** |

**A.    CLASSIFICATION OF SUBJECT MATTER**

H01M 50/103(2021.01)i

According to International Patent Classification (IPC) or to both national classification and IPC

**B.    FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

WPI, EPODOC, CNPAT, CNKI: 电池, 壳, 箱, 容器, 极耳, 端子, 板, 五, 斜, 夹角, 角度, 侧壁, 侧板, 侧面, batter+, cell?, box??, hous+, container?, terminal?, tab?, plate?, five, slpoe?, angle?, side, wall

**C.    DOCUMENTS CONSIDERED TO BE RELEVANT**

| Category* | Citation of document, with indication, where appropriate, of the relevant passages | Relevant to claim No. |
|---|---|---|
| PX | CN 216054920 U (BYD CO., LTD.) 15 March 2022 (2022-03-15)<br>description, paragraphs 5-15, and figures 1-5 | 1-10 |
| A | CN 213425049 U (NINGDE AMPEREX TECHNOLOGY LTD.) 11 June 2021 (2021-06-11)<br>description, paragraphs 51-66, and figures 1-4 | 1-10 |
| A | CN 106356499 A (NINGDE AMPEREX TECHNOLOGY LTD.) 25 January 2017<br>(2017-01-25)<br>entire document | 1-10 |
| A | CN 203553230 U (NO.18 RESEARCH INSTITUTE OF CETC) 16 April 2014 (2014-04-16)<br>entire document | 1-10 |
| A | CN 211404539 U (ZHUHAI COSMX BATTERY CO., LTD.) 01 September 2020<br>(2020-09-01)<br>entire document | 1-10 |
| A | US 6451474 B1 (MATSUSHITA ELECTRIC INDUSTRIAL CO., LTD.) 17 September 2002<br>(2002-09-17)<br>entire document | 1-10 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 November 2022** | **30 November 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

# EP 4 333 164 A1

## INTERNATIONAL SEARCH REPORT
### Information on patent family members

International application No.

**PCT/CN2022/119291**

| Patent document cited in search report | | | Publication date (day/month/year) | Patent family member(s) | | | Publication date (day/month/year) |
|---|---|---|---|---|---|---|---|
| CN | 216054920 | U | 15 March 2022 | None | | | |
| CN | 213425049 | U | 11 June 2021 | CN | 113383448 | A | 10 September 2021 |
| | | | | WO | 2022061851 | A1 | 31 March 2022 |
| CN | 106356499 | A | 25 January 2017 | WO | 2018076452 | A1 | 03 May 2018 |
| CN | 203553230 | U | 16 April 2014 | None | | | |
| CN | 211404539 | U | 01 September 2020 | None | | | |
| US | 6451474 | B1 | 17 September 2002 | EP | 1995819 | A2 | 26 November 2008 |
| | | | | NO | 20002365 | D0 | 05 May 2000 |
| | | | | DE | 69940252 | D1 | 26 February 2009 |
| | | | | EP | 1033766 | A1 | 06 September 2000 |
| | | | | WO | 0016416 | A1 | 23 March 2000 |
| | | | | JP | 2000149892 | A | 30 May 2000 |
| | | | | JP | 2000149893 | A | 30 May 2000 |
| | | | | JP | 2000340190 | A | 08 December 2000 |
| | | | | JP | 2000340194 | A | 08 December 2000 |
| | | | | JP | 2001057190 | A | 27 February 2001 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202122409606